# EUROPEAN PATENT APPLICATION

(11) **EP 2 058 033 A1**
(43) Date of publication of application: **13.05.2009**
(21) Application number: 08019526.6
(22) Date of filing: 07.11.2008
(51) Int. Cl.: A63B 53/14, B25G 1/10, B29C 33/42, B29C 45/37, B29C 37/00

(54) **Flexible grip and method of making same**

(30) Priority: 07.11.2007 US 936293
(71) Applicant: Eaton Corporation, Cleveland, Ohio 44114-2584 (US)
(72) Inventor: Gill, David Keith, Pinehurst NC 28374 (US)
(74) Representative: Wagner, Karl H.

(57) **Abstract**

A flexible grip for hand engaged implements or tools which is formed of transparent material with an optically clear outer surface with raised texture-forming portions thereon. The grip is molded in a cavity having depressions therein for forming the raised portions, and the inner surface of the cavity is highly polished to provide an optically clear outer surface for the molded grip.

## Description

### BACKGROUND

The present disclosure relates to flexible grips for hand-grasped implements or tools and particularly, grips of the type which may be installed on the tool or implement handle after manufacture of the basic device. Such grips are employed, for example, on sporting goods such as golf clubs or tennis racquets and on tools such as carpenter's and mason's hammers and garden tools, where it is desired to provide a resilient or flexible grip comfortable to the hand yet providing adequate retaining force or friction to prevent the implement or tool from slipping from the hands of the user upon movement in use.

In certain applications it has been found desirable from a marketing viewpoint to provide a transparent or optically clear grip on the tool or implement in order that the user may view a trademark, design or informational marking provided on the handle during manufacture. Such transparent grips have found acceptance in the marketplace; however, it has been difficult to provide a transparent or optically clear outer surface to the flexible material utilized for the grip. In addition, if the outer surface of the flexible grip is sufficiently smooth or polished to provide the desired transparency, this has adversely affected the ability of the user to maintain a tight grip thereon during use. Therefore, it has been desired to provide a flexible grip for a tool or implement which has a transparent or optically clear surface and yet one which retains gripability of a flexible grip having a textured opaque outer surface.

### BRIEF DESCRIPTION

The present disclosure describes a flexible grip for a tool or implement of the type which is molded of transparent flexible material and has an optically clear outer surface with raised, textured portions thereon integrally formed with the transparent grip to provide the desired gripability. The grip is formed in a cavity in a mold with the surface of the cavity having depressions provided therein for molding raised or textured portions on the exterior surface of the grip. After formation of the texture depressions in the mold, the remaining surface of the mold cavity is highly polished to provide a similar surface to the transparent grip material upon molding therein. The grip may be formed of any desirable flexible material such as elastomeric material or thermoplastic elastomer for providing the desired flexibility.

### BRIEF DESCRIPTION OF THE DRAWINGS

FIGURE 1 is an isometric view of portions of two mold half sections showing the texture forming depressions therein;

FIGURE 2 is a view of a portion of the molded grip of the present disclosure;

FIGURE 3 is a portion of a section view taken along section indicating lines 3-3 of FIGURE 1; and,

FIGURE 4 is a portion of a section view taken along section indicating lines 4-4 of FIGURE 2.

### DETAILED DESCRIPTION

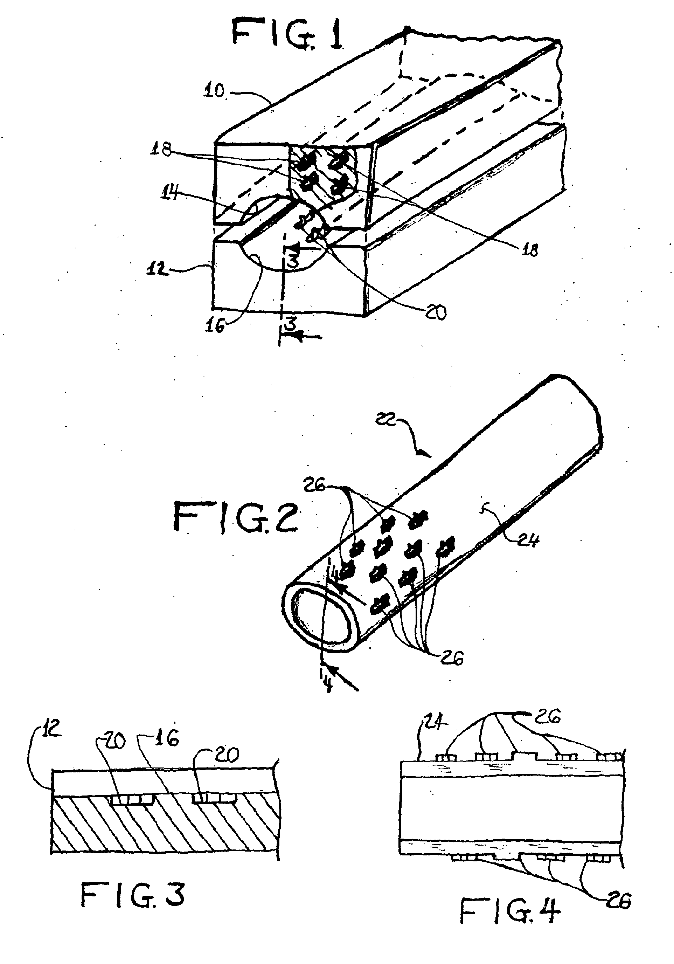

Referring to FIGURES 1 and 3, an upper and lower mold half section are indicated at 10, 12, respectively, and each has formed therein a cavity forming mold surface 14, 16, respectively, which is configured to provide the desired outer surface of the grip to be molded upon closure of the mold sections as indicated by the dashed line in FIGURE 1. Each of the mold surfaces 14, 16 has formed therein a plurality of shallow recesses 18, 20, respectively, into which the material of the grip will flow during molding. The recesses 18, 20 may have any desired configuration and arrangement as, for example, the semi cruciform shape arranged in a diamond or staggered pattern as shown in the drawings.

The arrangement of the depressions is shown in enlarged detail for the lower mold section 12 in FIGURE 3.

The surfaces 14, 16 of the mold sections 10, 12 are highly polished to a mirror-like surface after the formation of the depressions 18, 20 and prior to molding. In the present practice it has been found satisfactory to polish the surfaces 14, 16 to about an 8 micro inch or better surface.

Referring to FIGURES 2 and 4, the molded grip is indicated generally at 22 as it appears after removal from the mold, and has the outer surface 24 thereof formed to a highly polished or very smooth configuration by the mold surfaces 14, 16 and, thus, retains its transparency and optical clarity. The raised textured surface is formed by the portions 26 extending upwardly from the surface 24, which raised portions are formed in the depressions 18, 20. The raised portions 20 are shown in enlarged detail in FIGURE 4. It will be understood that the elastomeric material is transparent or optically clear.

The present disclosure thus describes a flexible grip for use with hand held implements or tools which has the material of the grip transparent or optically clear with a polished outer surface having raised portions thereon producing a textured surface for facilitating gripping. The grip is formed in mold cavities with depressions formed therein to allow for material to flow therein to create the raised portions for the textured surface; and, the surfaces of the mold cavity are then highly polished to provide an optically clear outer surface to the molded grip.

The exemplary embodiment has been described with reference to the preferred embodiments. Obviously, modifications and alterations will occur to others upon reading and understanding the preceding detailed description. It is intended that the exemplary embodiment be construed as including all such modifications and alterations insofar as they come within the scope of the appended claims or the equivalents thereof.

## Claims

1. A method of making a flexible grip for a handle comprising:
(a) forming a molding cavity in a mold and forming a plurality of depressions in the wall of the cavity;
(b) polishing the cavity wall except for the depressions;
(c) disposing curable flexible material in the mold and molding a grip with a polished surface and forming raised portions thereon by molding material in the depressions; and,
(d) curing the flexible material in the mold; and, removing the grip from the mold.

2. The method defined in claim 1, wherein the step of disposing curable flexible material includes disposing transparent material.

3. The method defined in claim 1, wherein the step of disposing curable flexible material includes disposing optically clear material.

4. The method defined in claim 1, wherein the step of disposing curable flexible material includes disposing uncured elastomeric material.

5. The method defined in claim 1, wherein the step of forming a plurality of depressions includes forming depressions configured to provide raised textured surfaces on the grip.

6. The method defined in claim 1, wherein the step of forming depressions includes forming patterns for the raised portions.

7. The method defined in claim 1, wherein the step of forming a cavity in a mold includes configuring a cavity for molding a sports implement handle.

8. The method defined in claim 7, wherein the step of configuring includes configuring the cavity for a golf club handle grip.

9. A flexible grip for an implement handle comprising:
(a) a one piece tubular portion formed of elastomeric material and having one end thereof closed and an end opposite thereof open for receiving the implement handle therein;
(b) the exterior surface of said member having a smooth polished surface appearance; and,
(c) a plurality of raised portions disposed about the polished surface and extending outwardly therefrom for facilitating gripping.

10. The grip defined in claim 9, wherein the exterior polished surface is formed of elastomeric material.

11. The grip defined in claim 10, wherein the elastomeric material is optically clear.

12. The grip defined in claim 10, wherein the exterior polished surface is formed of transparent elastomeric material.

13. The grip defined in claim 9, wherein the exterior polished surface is formed of elastomeric material.

14. The method defined in claim 9, wherein the raised portions are disposed in a pattern.
